# EUROPEAN PATENT APPLICATION

(11) **EP 0 677 383 A2**
(43) Date of publication of application: **18.10.1995**
(21) Application number: 95302207.6
(22) Date of filing: 03.04.1995
(51) Int. Cl.: B41B 19/00, G06K 15/12, H04N 1/04

(54) **A plot strip butting image setter**

(30) Priority: 07.04.1994 IL 10924894
(71) Applicant: SCITEX CORPORATION LTD., IL-46103 Herzlia Bet (IL)
(72) Inventor: Karp, Omer, Kochav Yair, 44864 (IL); Bronstein, Rafail, Kfar Saba 44414 (IL); Bieber, Avigdor, Ra'anana 43220 (IL); Vronsky, Eliyahu, Ramat Hasharon (IL); Halup, Nir, Tzoran 42823 (IL); Benizri, Ilan, Herzlia (IL); Lichtenstein, Yoav, Ra'anana (IL)
(74) Representative: Hillier, Peter

(57) **Abstract**

An imagesetter for exposing a medium (12) is disclosed, as is a method of exposing. The imagesetter includes a slowly translating carriage (10), a flat-field scanning optical head (14) translation apparatus to translate the optical head (14) and butting apparatus (31). The optical head (14) scans only a portion of a scan line (38) at a time and thus exposes at least two strips (16) of the medium (12), wherein the strips (14) overlap in a butting zone. The butting apparatus (31) controls the exposure of the medium (12) within the butting zone.

## Description

### FIELD OF THE INVENTION

The present invention relates to wide format imagesetters generally and to wide format imagesetters for semi-rigid media, in particular.

### BACKGROUND OF THE INVENTION

There are three basic types of imagesetters, external drum, internal drum and flat field imagesetters. In external drum imagesetters, the medium to be exposed is wrapped around a drum which rotates at a relatively fast speed. An optical head moves relatively slowly along the length of the drum and provides a beam in a single direction perpendicular to the surface of the drum.

Internal drum imagesetters wrap the medium to be exposed inside a drum. An optical head moves slowly along the length of the drum, inside of it, and comprises a scanning head which scans the inner circumference of the drum. The scanning head may include a spinner or a penta-prism. The medium stays stationary during scanning.

Flat field imagesetters scan a medium which lies on a flat surface. There is relative movement between the optical head and the flat surface; either the optical head moves or the flat surface moves. Typically, the optical head moves slowly in a subscanning direction (the length of the flat surface) and scans along a line in a scanning direction (across the surface). The optical head comprises flat field optics formed of a spinner, a polygonal mirror and a flat field lens (i.e. an fϑ lens), where the spinner sweeps the beam in the scanning direction and the fϑ lens ensures that the beam is focussed across the entirety of the line.

Wide format imagesetters are those which have a scanning width of wider than 1 meter. Since it is not practical to produce flat field optics for scanning directions wider than 0.5 meter, existing wide format imagesetters are of either the internal or the external drum types. An exemplary external drum wide format imagesetter is the Sprint 110 manufactured by Orbotech Ltd. of Yavne, Israel and an exemplary internal drum wide format imagesetter is the Dolev 800 manufactured by Scitex Corporation Ltd. of Herzlia, Israel.

For semi-rigid media, such as aluminum based offset printing plates, both the internal and external drum type of imagesetters have disadvantages. Since the semi-rigid media have non-negligible weights and since external drum imagesetters are rotated quickly, the drum can become unbalanced due to the weight of the medium on them. This is especially true if it is desired to be able to print onto media of different lengths since they cover different amounts of the drum. With respect to internal drum imagesetters, semi-rigid media do not bend easily and therefore, it is difficult to slide them into the internal drum.

### SUMMARY OF THE PRESENT INVENTION

It is therefore an object of the present invention to provide a wide format imagesetter utilizing flat field optics. Since flat field optics do not perform well for widths of over 0.5m, the wide format imagesetter of the present invention utilizes a narrow optical head and sets the image in strips.

The imagesetter of the present invention preferably includes a slowly rotating drum or carriage, an optical head and translation apparatus. The drum or carriage is operative to externally receive a medium and the optical head, which has flat-field optics, scans a portion of a scan line on the medium while the drum or carriage moves, thereby exposing a strip of the medium. The translation apparatus translates the optical head from one scanning location, at which a first strip is exposed, to a next scanning location at which a second strip is exposed.

Additionally, in accordance with a preferred embodiment of the present invention, the optical head exposes scan lines of a standard narrow paper width. It can also expose separate pages of standard paper sizes.

Moreover, in accordance with a preferred embodiment of the present invention, the first and second strips overlap in a butting zone. The imagesetter therefore includes butting apparatus for controlling exposure within the butting zone.

Further, in accordance with a first preferred embodiment of the present invention, the butting apparatus varies the beginning and end exposure locations of successive scan lines. Alternatively or in conjunction, the butting means gradually increases and decreases exposure intensity within right and left butting zones, respectively.

Still further, in accordance with a preferred embodiment of the present invention, the present invention also includes a plurality of sensors, at least as many as the number of butting zones between strips, for on-line determination of the scanning locations of the optical head.

Moreover, in accordance with a preferred embodiment of the present invention, the present invention also includes a distance sensor for determining the distance from the optical head to an exposable surface of the medium and apparatus for compensating for the determined distance.

The present invention also incorporates the method which the imagesetter of the invention performs. Specifically, the method includes the steps of a) bringing the optical head to a scanning location and b) exposing said medium in strips. The step of exposing includes the step of controlling exposure within a butting zone between two strips. The step of controlling exposure can either vary the beginning and end exposure locations of successive scan lines or gradually increase and decrease exposure intensity within right and left butting zones, respectively, or both.

Finally, in accordance with a preferred embodiment of the present invention, the method includes the step of determining the distance from the optical head to an exposable surface of the medium and compensating for the determined distance.

### BRIEF DESCRIPTION OF THE DRAWINGS

The present invention will be understood and appreciated more fully from the following detailed description taken in conjunction with the drawings in which:
Fig. 1 is a schematic illustration of an external drum imagesetter having a flat-field optical head, constructed and operative in accordance with a preferred embodiment of the present invention;
Fig. 2 is a pictorial illustration of a butting zone where two plotting strips meet;
Fig. 3 is an illustration of a first method of performing butting which changes the length of the scan row;
Fig. 4 is an illustration of a second method of performing butting which changes the exposure level of pixels within the butting zone;
Fig. 5 is a pictorial illustration of a method of positioning the optical head of Fig. 1; and
Fig. 6 is a schematic illustration of sources of error due to the thickness of the medium to be scanned.

### DETAILED DESCRIPTION OF A PREFERRED EMBODIMENT

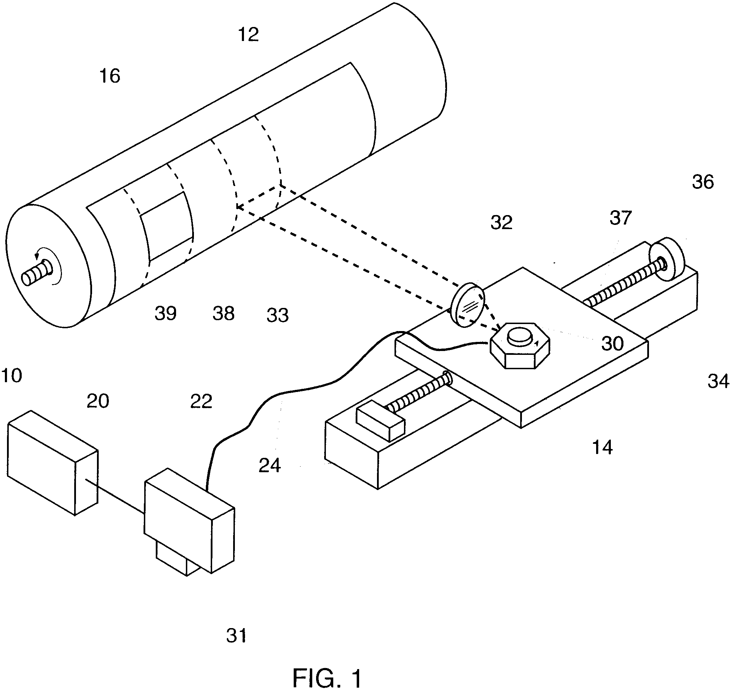

Reference is now made to Fig. 1 which illustrates the imagesetter of the present invention. The imagesetter typically comprises a slowly rotating drum 10, on which a medium 12 is placed, and a flat-field optical head 14 operative to expose the medium 12 in strips 16.

The optical head 14 comprises typical flat-field optics, such as a spinner 30 and an f-theta lens 32, and scans a beam 33 across a scan line 38. The spinner 30 typically receives modulated light from a light source 20 and a light beam controller 22 via a fiber optic waveguide 24. Other ways of providing light to the head 14 are also possible.

Optical head 14 is located outside of the drum 10, within a guide 34, and is moved from one strip to the next by a lead screw 37 connected to a motor 36. Because the optical head 14 exposes a scan line 38 rather than a point, as is typical for prior art, external drum optical heads, the drum 10 of the present invention rotates slowly. Furthermore, the movement of the optical head 14 is stepped and only occurs once a strip 16 has been finished.

In accordance with one preferred embodiment of the present invention, the optical head 14 exposes strips 16 whose width is one of the standard narrow paper size widths, such as A4 or B4. Furthermore, the optical head 14 can expose sections of a strip in order to produce an image 39 of a standard paper size. This is particularly useful for exposing printing plates which typically are exposed with two rows of four separate pages, each a standard paper size.

Exposing media in strips poses a problem at the point where two neighboring strips butt each other. If the movement of the optical head 14 from one strip location to the next is not exact, the pixels on one edge of the new strip will either slightly cover up or be slightly too far from the pixels on the other edge of the previous strip. Unfortunately, even though the errors of location are very small, they occur for every scan line in the strip and the human eye is extremely sensitive to repetitive patterns.

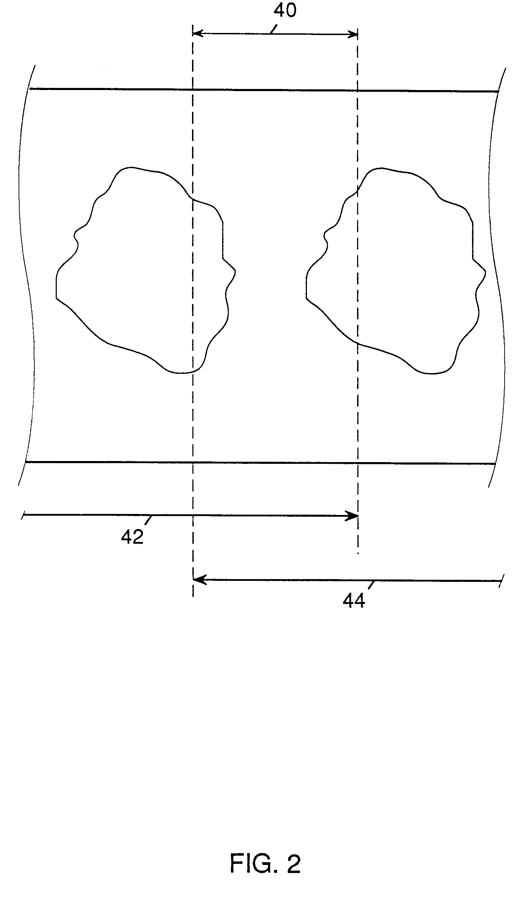

Therefore, the light beam controller 22 of the present invention includes butting means 31 for controlling the exposure of the light beam 33 within a butting zone between strips 16. The butting means 31 attempts to produce seamless butting of two neighboring strips. The methods it utilizes are illustrated in Figs. 2 - 4 to which reference is now made.

In accordance with a preferred embodiment of the present invention, within the butting zone, labeled 40 in Figs. 2 - 4, the line of butting is blurred, either by moving the location of butting between scan lines or by changing the intensity of the pixels from strip to strip. As illustrated in Fig. 2, two neighboring strips, labeled 42 and 44, overlap in butting zone 40, wherein butting zone 40 is typically small compared to the width of the strips 16 and of the resolution and possibly the screen of the image data. In the discussion hereinbelow, strips 42 and 44 represent the left and right strips, respectively, of every butting zone 40.

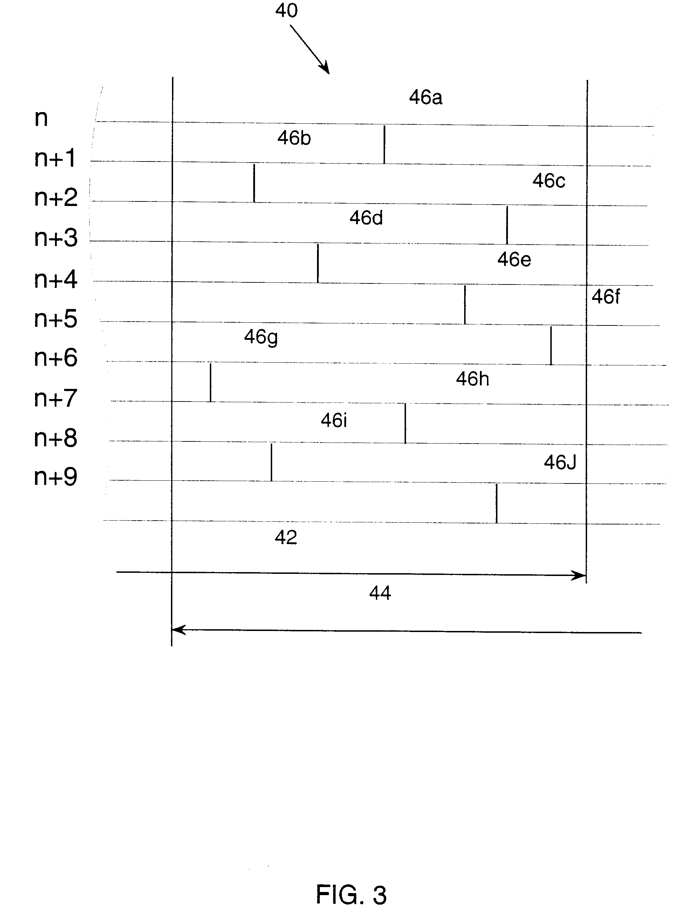

In the first method, illustrated in Fig. 3, the scan lines of strips 42 and 44 butt each other, rather than overlapping. However, the length of each scan line varies pseudorandomly and thus, the butting edge is not a straight line. Fig. 3 illustrates 11 lines, labeled n through n+9 and their butting locations, labeled 46a - 46j. It can be seen that the butting locations 46 fall within butting zone 40 but do not follow any obvious pattern.

As long as the curve of the butting edge of each butting zone 40 is different (i.e. the length of the scan lines of a single line across the medium vary), the minor butting errors which occur at each butting location 46 will not be noticeable to the human eye since they do not occur in any repetitive fashion.

In order to implement the butting method of Fig. 3, the beginning and ending location of each scan line, for each strip 42 and 44, must be remembered, wherein the end locations of the scan lines of strip 42 are the beginning locations of the scan lines of strip 44. These beginning and ending locations can be stored in a lookup table which is accessed by the control apparatus (not shown) of the optical head 14.

It is noted that the optical head 14 does not change locations between scan lines of a single strip. Therefore, the varied beginning and ending locations are implemented through modulation of the light beam 33. In other words, if the beginning location of a scan line is not at the leftmost possible location of a scan line, the light beam is turned off until the beam reaches the desired beginning location and similarly for the ending location.

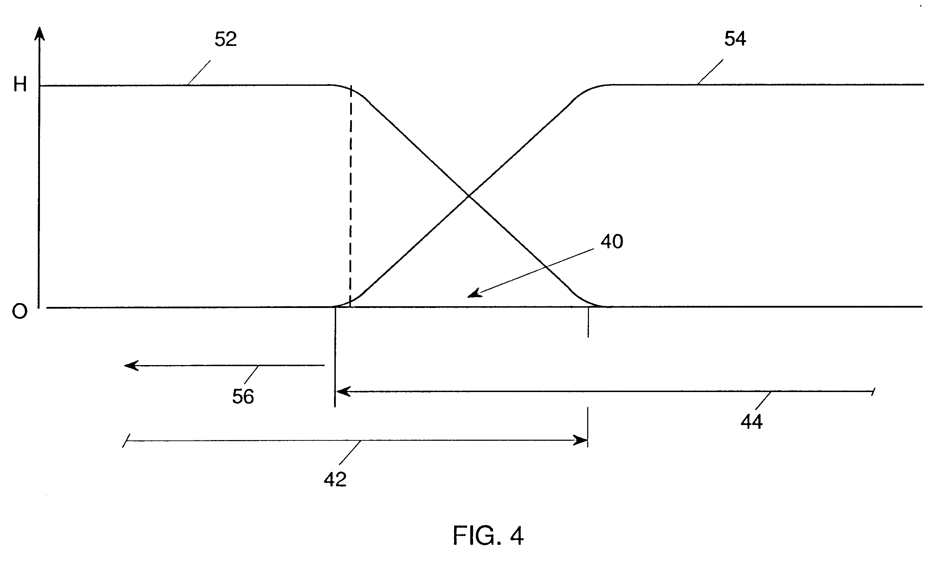

The second butting method, illustrated in Fig. 4, involves changing the intensity of exposure of the two neighboring strips 42 and 44 within the butting zone 40. Fig. 4 illustrates the exposure intensities 52 and 54 of the two strips 42 and 44, respectively.

The exposure intensity 52 of the left strip 42 is constant and at a full level H within a portion 56 not in butting zone 40. Within butting zone 40, the exposure intensity gradually decreases to a zero level. The exposure intensity 54 of the right strip 44 gradually increases, within the butting zone 40, from a zero level to the full level H. Outside of the butting zone 40, the exposure intensity 54 is constant at the full level H until reaching the butting zone 40 on the other side of the strip 44, at which point it behaves according to curve 52.

The exposure intensity curves 52 and 54 are designed so that, within the butting zone 40, the total exposure level for each pixel is the full level H even though the exposure is provided as a combination of the exposures of the neighboring strips 42 and 44.

It will be appreciated that the methods of Figs. 3 and 4 are not exclusive. They can also be performed together. In other words, the butting edges 46 vary among the scan lines, as shown in Fig. 3, and the intensities vary throughout the butting zone 40, as shown in Fig. 4.

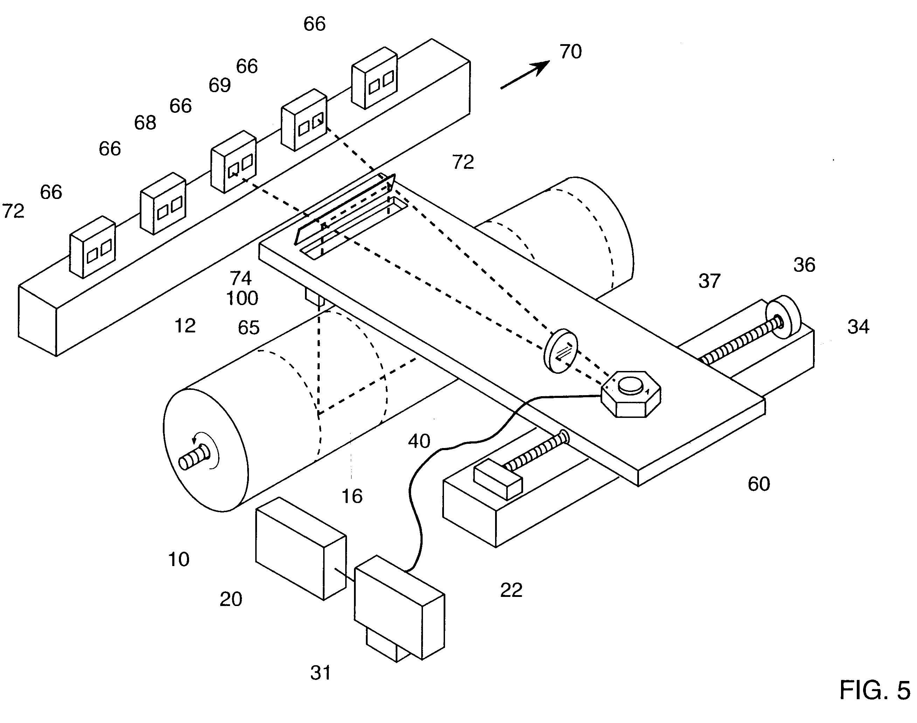

Reference is now made to Fig. 5 which illustrates an imagesetter having a system for determining the location of an optical head which exposes a medium in strips. As shown in Fig. 5, the system is implemented on an external drum imagesetter; however, it can also be implemented in flat-bed imagesetters.

The optical head, labeled 60, of the imagesetter of Fig. 5 provides the beam, labeled 65, to the top of the drum 10, rather than to its side as shown in Fig. 1. As a result, the head 60 also comprises a mirror 72 for folding the exposing light beam 65 towards the medium 12. In accordance with the present invention, the mirror 72 is at least partially transparent.

The imagesetter of Fig. 5 additionally comprises a position determining system comprising a plurality of light beam sensors 66, wherein the number of sensors 66 is at least equal to the number of butting zones 40. The sensors 66 are typically bicell sensors, such as the SPOT-2D commercially available from UDT Sensors Inc. of Hawthorne, California, USA, each comprising two cells 68 and 69. The sensors 66 are placed in locations 72 corresponding at least to the butting zones 40 (and possibly also at the edges) of the medium and are oriented so that the two cells 68 and 69 extend along a direction 70 of travel of the optical head 60.

After the optical head 60 is moved to a scanning location, the light beam, labeled 74, is separately provided to two locations outside of the exposure area. In each case, the beam 74 illuminates the appropriate sensor 66 which provides an output indication of the location of the beam with respect to the center line of the sensor 66. From the output of the two sensors 66, the exact location of the optical head 60 can be calculated. If the optical head 60 is not in its ideal location, the position information thus gathered can be utilized to correct the modulation of the exposing beam 65 such that the current strip is exposed in the proper location, regardless of the location of the optical head 60.

It will be appreciated that the correction operation enables the motor 36 and lead screw 37 not to be extremely accurate and enables them to function without an encoder.

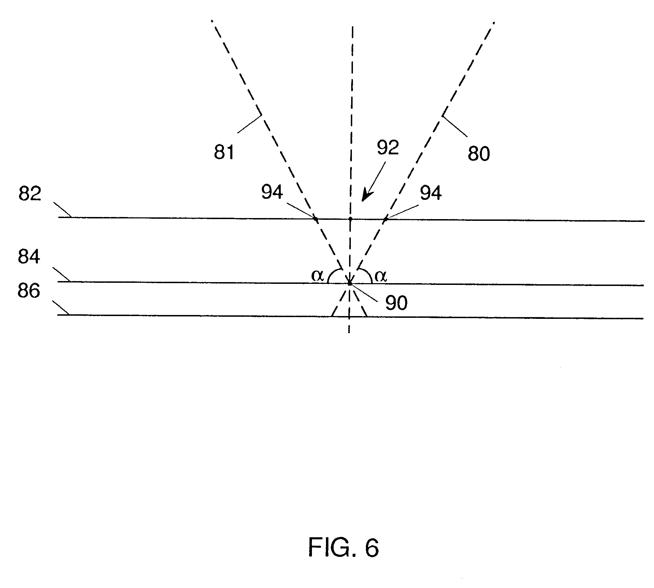

It is noted that the thickness of medium 12 varies within a predefined tolerance. If the medium 12 has a thickness other than exactly the desired one, the systems of Figs. 1 and 5 will not properly butt the strips. This problem is illustrated in Fig. 6 to which reference is now additionally made.

Fig. 6 illustrates two beams 80 and 81, one from each of two butting strips, impinging upon three possible surfaces 82, 84 and 86 of a medium. Surface 84 is the surface for which the system was designed and therefore, beams 80 and 81 converge on a single point 90 and the two strips are properly butted. Surface 82 is closer (i.e. the medium is thicker) to the optical head from which beam 80 comes. As a result, the beams 80 and 81 do not converge. There is a gap 92 between the two edges 94 of the strips. Surface 86 is the outer surface of a thinner medium. The beams 80 and 81 overlap when reaching surface 86. The strips are thus overlapping.

In accordance with the present invention and as shown in Fig. 5, a proximity sensor 100 is placed onto optical head 60, facing the surface of drum 10. For example, sensor 100 could be the LB72 commercially available from Keyence Corporation of Osaka, Japan. Sensor 100 senses the distance from the optical head 60 to the surface of medium 12 and provides the information to the light controller 22. Through butting means 31, the light controller 22 modifies the light so as to compensate for the butting errors due to the thickness of the medium 12. The compensation is typically provided by modifying the timing of the light modulation throughout the butting zone only. This causes the location of the pixels of the scan line to change. For example, if the butting zone is 200mm and the thickness error is such to causes a butting error of 0.1mm, the timing is changed so as to spread the 0.1mm error across the whole butting zone.

It will be appreciated that the methods shown herein can be implemented on flat-bed imagesetters also.

It will be appreciated by persons skilled in the art that the present invention is not limited to what has been particularly shown and described hereinabove. Rather the scope of the present invention is defined by the claims which follow:

## Claims

1. An imagesetter for exposing a medium, the imagesetter comprising:
a slowly rotating drum operative to externally receive said medium;
a flat-field scanning optical head for scanning a portion of a scan line on said medium while said drum rotates, thereby to expose a strip of said medium; and
translation apparatus for translating said optical head from one scanning location for exposing a first strip to a next scanning location for exposing a second strip.

2. An imagesetter for exposing a medium, the imagesetter comprising:
a slowly translating carriage operative to receive said medium;
a flat-field scanning optical head for scanning a portion of a scan line on said medium while said carriage translates, thereby to expose at least first and second strips of said medium, wherein said first and second strips overlap in a butting zone;
translation apparatus for translating said optical head from one scanning location for exposing a first strip to a next scanning location for exposing a second strip; and
butting means for controlling exposure within said butting zone.

3. An imagesetter according to claim 1 wherein said first and second strips overlap in a butting zone and also comprising butting means for controlling exposure within said butting zone.

4. An imagesetter according to either of claims 1 or 2 and wherein said butting means includes means for varying the beginning and end exposure locations of successive scan lines.

5. An imagesetter according to either of claims 1 or 2 and wherein said butting means includes means for gradually increasing and decreasing exposure intensity within right and left butting zones, respectively.

6. An imagesetter according to either of claims 1 or 2 and wherein said butting means includes means for gradually increasing and decreasing exposure intensity within right and left butting zones, respectively, and means for varying the beginning and end exposure locations of successive scan lines.

7. An imagesetter according to either of claims 1 or 2 and also comprising a plurality of sensors, at least as many as the number of butting zones between strips, for on-line determination of the scanning locations of said optical head.

8. An imagesetter according to either of claims 1 or 2 and also comprising a distance sensor for determining the distance from said optical head to an exposable surface of said medium and means for compensating for said determined distance.

9. A method for exposing a large size medium with a narrow width optical head, the method comprising the steps of:
bringing said optical head to a scanning location; and
exposing said medium in strips,
wherein said step of exposing includes the step of controlling exposure within a butting zone between two strips.

10. A method according to claim 11 wherein said step of controlling exposure includes the step of varying the beginning and end exposure locations of successive scan lines.
